# EUROPEAN PATENT APPLICATION

(11) **EP 3 567 889 A1**
(43) Date of publication of application: **13.11.2019**
(21) Application number: 17890714.3
(22) Date of filing: 05.12.2017
(51) Int. Cl.: H04W 16/02, H04W 28/06, H04W 72/04

(54) **USER DEVICE AND BASE STATION**

(30) Priority: 06.01.2017 JP 2017001452
(71) Applicant: NTT DOCOMO, INC., Chiyoda-ku Tokyo 100-6150 (JP)
(72) Inventor: SANO, Yousuke, Tokyo 100-6150 (JP); TAKEDA, Kazuki, Tokyo 100-6150 (JP); NAGATA, Satoshi, Tokyo 100-6150 (JP); GUO, Shaozhen, Beijing 100190 (CN)
(74) Representative: Hoffmann Eitle
(86) International application number: PCT/JP2017/043685
(87) International publication number: WO 2018/128039

(57) **Abstract**

A transmission scheme for reference signals in consideration of interference between adjacent cells in a radio communication system where uplink communication and downlink communication can be dynamically switched is disclosed. One aspect of the present invention relates to a user equipment, comprising: a transmission and reception unit configured to transmit and receive radio signals to and from a base station in accordance with a communication scheme where uplink communication and downlink communication are dynamically switched; and a muting unit configured to mute an uplink radio resource indicated from the base station, wherein the transmission and reception unit transmits a demodulation reference signal in the radio resource indicated from the base station to the base station, and the muted uplink radio resource corresponds to a downlink radio resource for transmitting a downlink demodulation reference signal after a downlink control channel at an adjacent base station.

## Description

### TECHNICAL FIELD

The present invention relates to a radio communication system.

### BACKGROUND ART

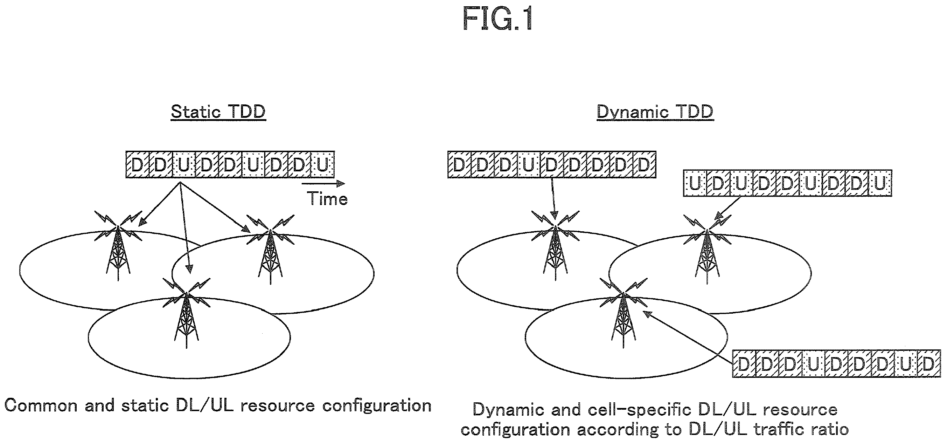

In 3GPP (Third Generation Partnership Project), a next-generation communication standard (5G or NR) of LTE (Long Term Evolution) and LTE-Advanced is being discussed. In an NR system, flexible duplex where resources for use in downlink communication and uplink communication are flexibly controlled depending on occurring downlink traffic and uplink traffic is being discussed. For example, dynamic TDD (Time Division Duplex) where uplink resources and downlink resources are dynamically switched in a time domain as illustrated in FIG. 1 is being discussed. As other examples, a scheme where they are switched in a frequency domain, and full duplex where the uplink communication and the downlink communication are simultaneously performed with same resources, and the like are being discussed. Although the dynamic TDD is illustratively described below for ease in description, other schemes may be analogously applied.

Typically, it is envisaged that a difference between the downlink traffic and the uplink traffic may be greater in a small cell than in a large cell. For this reason, the traffic can be efficiently accommodated by using the dynamic TDD for individual cells independently to control the downlink communication and the uplink communication.

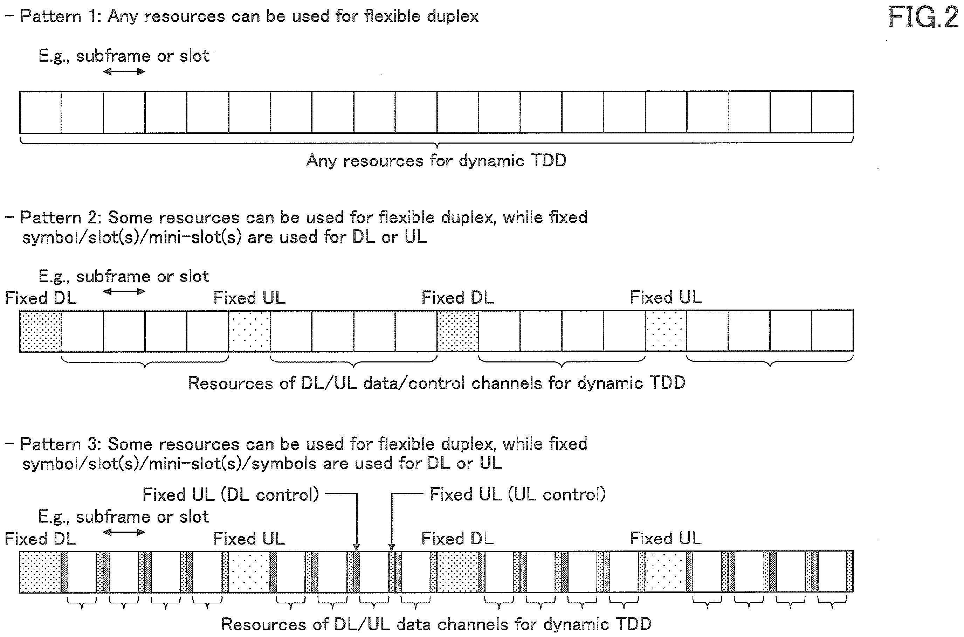

In the dynamic TDD, downlink and uplink communication directions are dynamically changed in a certain time interval such as a subframe, a slot or a mini slot. For example, as illustrated in FIG. 2, it is assumed in the dynamic TDD that the uplink communication and the downlink communication are performed in accordance with several uplink/downlink patterns. Note that these are merely illustrative without limitations. In the illustrated pattern 1, the uplink/downlink communication is allowed in all time intervals. In the pattern 2, the uplink/downlink communication is fixedly configured in some time intervals, and only the configured communication direction is allowed in these time intervals. On the other hand, the uplink/downlink communication is allowed in the other time intervals. In the pattern 3, the uplink/downlink communication is fixedly configured in some time intervals and certain periods in the time intervals (in the illustrated example, the downlink communication and the uplink communication are fixedly configured in both end periods within the time intervals), and only the configured communication direction is allowed in these time intervals. On the other hand, the uplink/downlink communication is allowed in the other time intervals.

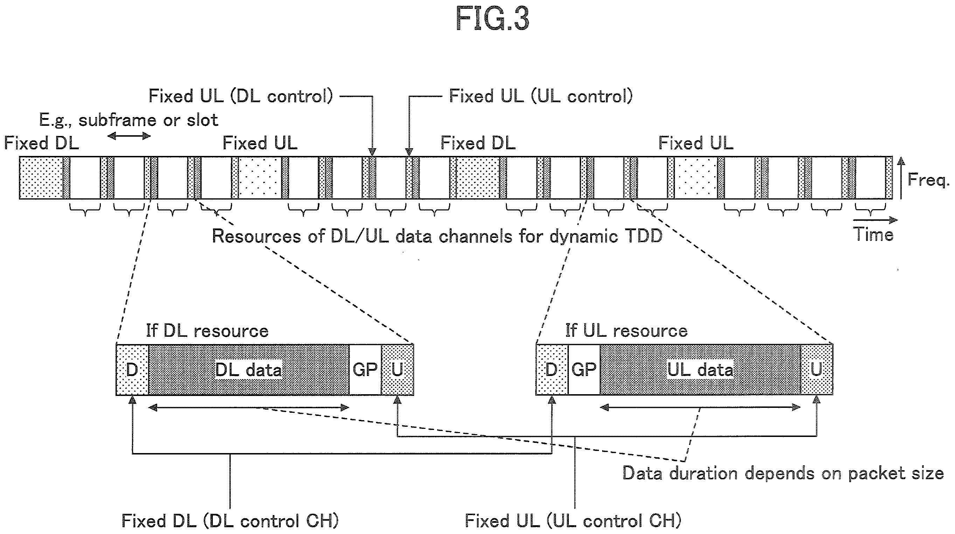

It is being discussed that the frame arrangement as illustrated in the pattern 3 in FIG. 2 may be introduced in an NR system. As illustrated in FIG. 3, for the time intervals where fixed downlink radio resources and uplink radio resources are configured in the partial periods, if the time intervals are assigned to the downlink communication, a downlink control channel is transmitted in the fixed downlink radio resources (D), an uplink control channel is transmitted in the fixed uplink radio resources (U), and downlink data (DL data) is transmitted between the fixed downlink radio resources and the fixed uplink radio resources. Note that a guard period (GP) is configured between the radio resources for downlink data transmission and the fixed uplink radio resources. On the other hand, if the time intervals are assigned to the uplink communication, a downlink control channel is transmitted in the fixed downlink radio resources (D), an uplink control channel is transmitted in the fixed uplink radio resources (U), and uplink data (UL data) is transmitted between the fixed downlink radio resources and the fixed uplink radio resources. Note that the guard period (GP) is configured between the fixed downlink radio resources and the radio resources for uplink data transmission. Typically, the period for transmission of downlink data/uplink data depends on the size of a to-be-transmitted packet.

### [Prior Art Document]

### [Non-Patent Document]

Non-patent document 1: 3GPP TR 36.829 V11.1.0 (2012-12)

### SUMMARY OF INVENTION

### [PROBLEM TO BE SOLVED BY THE INVENTION]

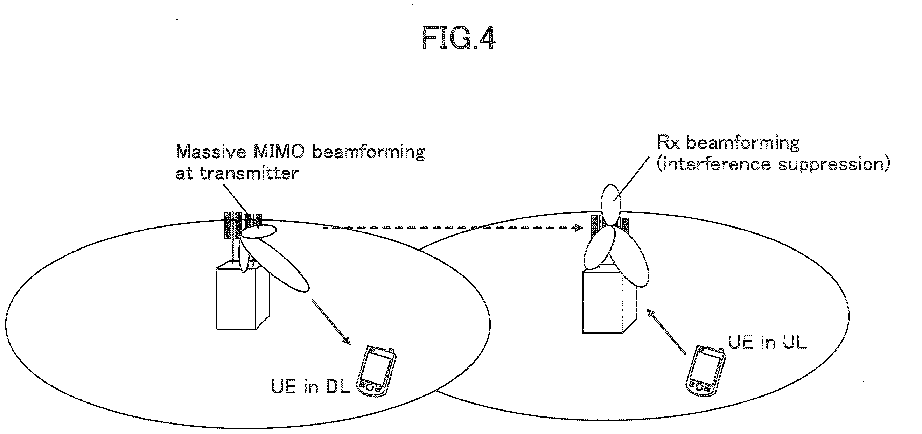

If the dynamic TDD is assumed, there are two types of interference signals, inter-cell interference and crosslink interference. Specifically, if the dynamic TDD is applied, the transmission direction may be different between adjacent cells. In this case, the two types of interference, interference from a transmitter in an adjacent cell performing transmission in the same direction as a desired signal from a transmitter in a cell of interest (inter-cell interference) and interference from a transmitter in an adjacent cell performing transmission in a different direction from a desired signal from the transmitter in the cell of interest (crosslink interference), are assumed. Particularly, it is considered that the crosslink interference may significantly affect uplink transmission from a user equipment at lower power than downlink transmission. For example, in the example where the user equipment transmits an uplink signal to a serving base station as illustrated in FIG. 4, there is a likelihood that the serving base station may be interfered with downlink transmission from an adjacent base station and cannot receive the uplink signal from the user equipment properly.

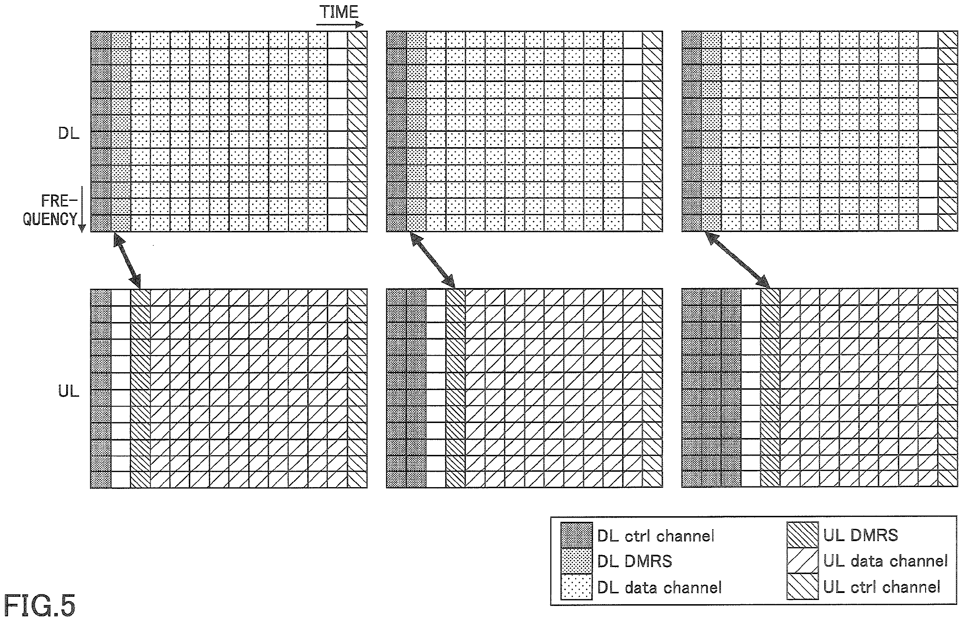

In an NR system, it is being discussed that a demodulation reference signal (DMRS) is arranged in a front symbol (front-loaded) in a subframe with respect to the time direction. In order to transmit the front-loaded downlink and uplink DMRSs without the inter-cell interference and/or the crosslink interference, it is considered that the downlink DMRS and the uplink DMRS may be transmitted in accordance with exemplary mapping as illustrated in the left side in FIG. 5. Specifically, the downlink DMRS is transmitted in a leading symbol in a downlink data channel, and the uplink DMRS is transmitted in a leading symbol in an uplink data channel.

On the other hand, similar to the LTE, the number of OFDM (Orthogonal Frequency Division Multiplexing) symbols (Control Format Indicator: CFI) in a downlink control channel is made variable in accordance with a transmission amount of the downlink control information. As a result, if the downlink DMRS and the uplink DMRS are front-loaded to the leading symbols in the downlink data channel and the uplink data channel, respectively, as illustrated in the middle illustration in FIG. 5, in the case of CFI = 2 for uplink, the downlink DMRS may suffer the inter-cell interference arising from the downlink control channel in an adjacent cell while the uplink DMRS may suffer the crosslink interference arising from the downlink data channel in an adjacent cell. Similarly, as illustrated in the right side in FIG. 5, also in the case of CFI = 3 for uplink, the downlink DMRS may suffer the inter-cell interference arising from the downlink control channel in an adjacent cell while the uplink DMRS may suffer the crosslink interference arising from the downlink data channel in the adjacent cell. In this case, appropriate channel estimation may be difficult by means of the DMRS, and it may be also difficult to estimate interfering covariance appropriately.

In light of the above problems, an object of the present invention is to provide a transmission scheme for reference signals in consideration of interference between adjacent cells in a radio communication system where the uplink communication and the downlink communication can be dynamically switched.

### [MEANS FOR SOLVING THE PROBLEM]

In order to overcome the above object, one aspect of the present invention relates to a user equipment, comprising: a transmission and reception unit configured to transmit and receive radio signals to and from a base station in accordance with a communication scheme where uplink communication and downlink communication are dynamically switched; and a muting unit configured to mute an uplink radio resource indicated from the base station, wherein the transmission and reception unit transmits a demodulation reference signal in the radio resource indicated from the base station to the base station, and the muted uplink radio resource corresponds to a downlink radio resource for transmitting a downlink demodulation reference signal after a downlink control channel at an adjacent base station.

### [ADVANTAGE OF THE INVENTION]

According to the present invention, a transmission scheme for reference signals in consideration of interference between adjacent cells in a radio communication system where the uplink communication and the downlink communication can be dynamically switched is provided.

### BRIEF DESCRIPTION OF DRAWINGS

FIG. 1 is a schematic diagram for illustrating an example of static TDD and dynamic TDD;
FIG. 2 is a schematic diagram for illustrating various DL/UL resource configurations for the dynamic TDD;
FIG. 3 is a schematic diagram for illustrating a frame arrangement for NR;
FIG. 4 is a schematic diagram for illustrating the crosslink interference;
FIG. 5 is a schematic diagram for illustrating exemplary mapping of DMRS resources;
FIG. 6 is a schematic diagram for illustrating a radio communication system according to one embodiment of the present invention;
FIG. 7 is a schematic diagram for illustrating exemplary mapping of DMRS resources according to one embodiment of the present invention;
FIG. 8 is a schematic diagram for illustrating exemplary mapping of DMRS resources according to one embodiment of the present invention;
FIG. 9 is a block diagram for illustrating a functional arrangement of a user equipment according to one embodiment of the present invention;
FIG. 10 is a block diagram for illustrating a functional arrangement of a base station according to one embodiment of the present invention;
FIG. 11 is a schematic diagram for illustrating exemplary mapping of DMRS resources according to one embodiment of the present invention;
FIG. 12 is a schematic diagram for illustrating exemplary mapping of DMRS resources according to one embodiment of the present invention;
FIG. 13 is a schematic diagram for illustrating exemplary mapping of DMRS resources according to one embodiment of the present invention;
FIG. 14 is a schematic diagram for illustrating exemplary mapping of DMRS resources according to one embodiment of the present invention;
FIG. 15 is a schematic diagram for illustrating exemplary mapping of DMRS resources according to one embodiment of the present invention;
FIG. 16 is a schematic diagram for illustrating exemplary mapping of DMRS resources according to one embodiment of the present invention;
FIG. 17 is a schematic diagram for illustrating exemplary mapping of DMRS resources according to one embodiment of the present invention;
FIG. 18 is a schematic diagram for illustrating exemplary mapping of DMRS resources according to one embodiment of the present invention;
FIG. 19 is a schematic diagram for illustrating exemplary mapping of DMRS resources according to one embodiment of the present invention;
FIG. 20 is a schematic diagram for illustrating exemplary mapping of DMRS resources according to one embodiment of the present invention;
FIG. 21 is a schematic diagram for illustrating exemplary mapping of DMRS resources according to one embodiment of the present invention;
FIG. 22 is a schematic diagram for illustrating exemplary mapping of DMRS resources according to one embodiment of the present invention;
FIG. 23 is a schematic diagram for illustrating exemplary mapping of DMRS resources according to one embodiment of the present invention;
FIG. 24 is a schematic diagram for illustrating exemplary mapping of a measurement subframe; and
FIG. 25 is a block diagram for illustrating a hardware arrangement of a user equipment and a base station according to one embodiment of the present invention.

### EMBODIMENTS OF THE INVENTION

Embodiments of the present invention are described below with reference to the drawings.

In the following embodiments, a user equipment and a base station performing radio communication in accordance with a communication scheme where uplink communication and downlink communication can be dynamically switched (for example, dynamic TDD where uplink resources and downlink resources are dynamically switched in a time domain or the like) are disclosed. Summarizing the embodiments as described below, in a subframe assigned for downlink communication, the base station transmits a demodulation reference signal in radio resources, where the user equipment performing radio communication with an adjacent base station does not perform uplink transmission, and mutes downlink radio resources corresponding to the radio resources for the user equipment to perform uplink transmission. On the other hand, in a subframe assigned for uplink communication at the same timing as a subframe assigned by an adjacent base station for downlink communication, the user equipment transmits the demodulation reference signal in indicated radio resources and mutes uplink radio resources corresponding to the radio resources for a downlink demodulation reference signal transmitted at the adjacent base station after a downlink control channel.

As a result, the inter-cell interference and/or the crosslink interference can be measured, and the downlink and uplink demodulation reference signals can be transmitted without suffering from the inter-cell interference and/or the crosslink interference.

However, the present invention is not limited to the dynamic TDD and may be applied to other schemes (for example, a scheme where uplink resources and downlink resources are switched in a frequency domain (dynamic FDD), full duplex where uplink transmission and downlink transmission are performed in identical resources, or the like).

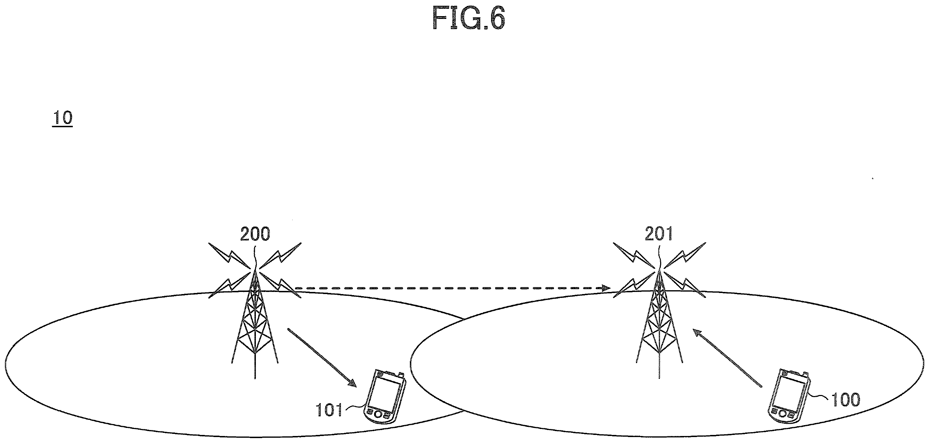

At the outset, a radio communication system according to one embodiment of the present invention is described with reference to FIG. 6. FIG. 6 is a schematic diagram for illustrating a radio communication system according to one embodiment of the present invention.

As illustrated in FIG. 6, a radio communication system 10 has user equipments 100, 101 and base stations 200, 201. In the following embodiments, the radio communication system 10 is a radio communication system compliant with standards subsequent from 3GPP Rel-14 (for example, 5G or NR systems) . However, the present invention is not limited to it, and it may be any other dynamic TDD applied radio communication system.

The user equipments 100, 101 are any appropriate information processing devices with radio communication functionalities such as a smartphone, a mobile phone, a tablet, a wearable terminal and a communication module for M2M (Machine-to-Machine) and connect for the base stations 201, 200, respectively, to use various communication services served from the radio communication system 10.

The base stations 200, 201 serve one or more cells for radio communication with the user equipments 101, 100, respectively. In the illustrated embodiment, only the two base stations 200, 201 are shown, but a large number of base stations are generally disposed to cover a service area for the radio communication system 10.

In the radio communication system 10 according to embodiments below, both end periods in a time interval as illustrated in FIG. 3 are fixedly configured for downlink communication and uplink communication, and the dynamic TDD where uplink/downlink communication is dynamically configured in a period sandwiched between these ends is applied. Also, the number of symbols assigned to an uplink/downlink control channel may be made variable. In addition, in the embodiments below, it is assumed that the user equipment 101 and the base station 200 perform downlink communication in a certain subframe while the user equipment 100 and the base station 201 perform uplink communication in the corresponding subframe.

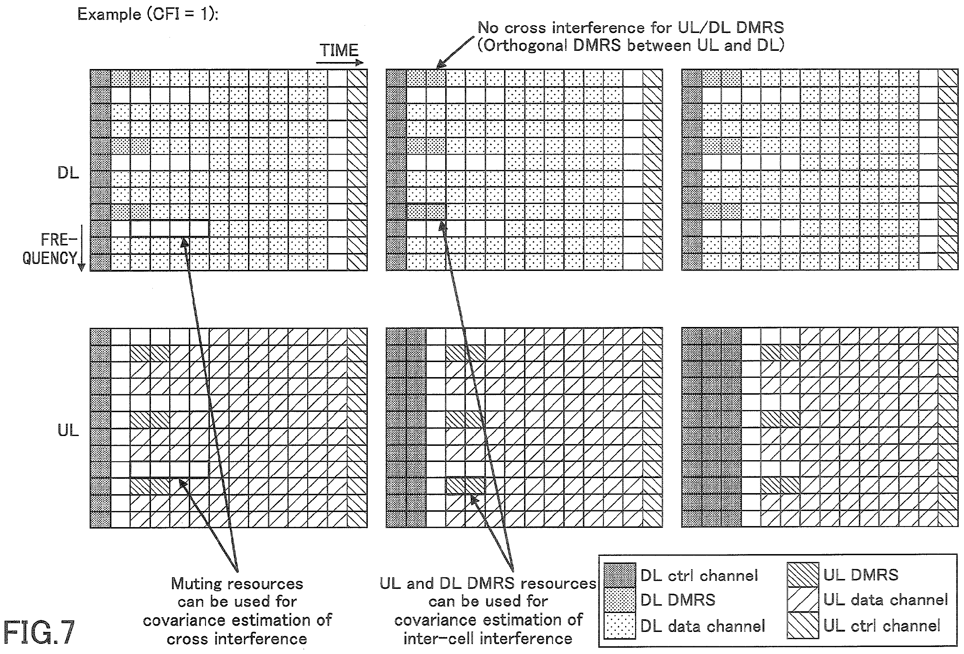

Then, as illustrated in FIG. 7, the base station 200 transmits a downlink control channel in symbol #1 in a subframe (CFI = 1) and a downlink demodulation reference signal (DL DMRS) in resource elements of resource blocks (RBs) #1, #5, #9 in symbols #2, #3, and mutes resource elements of RBs #2, #6, #10 in symbols #2 to #6. In other words, the base station 200 does not transmit a downlink data channel. On the other hand, the user equipment 100 receives the downlink control channel in symbol #1 (the example in the left side in FIG. 7), symbols #1, #2 (the example in the middle in FIG. 7) or symbols #1 to #3 (the example in the right side in FIG. 7) in the corresponding subframe depending on a variable transmission amount of downlink control information and configures a symbol immediately after the symbols for the downlink control channel as a guard period. In the illustrated example in the left side in FIG. 7, the user equipment 100 mutes resource elements of RBs #1, #5, #9 in symbols #3 to #6, that is, does not transmit the uplink data channel, and transmits an uplink DMRS (UL DMRS) in resource elements of RBs #2, #6, #10 in symbols #3, #4. Also, in the example in the middle in FIG. 7, the user equipment 100 mutes resource elements of RBs #1, #5, #9 in symbols #4 to #6, that is, does not transmit the uplink data channel, and transmits the UL DMRS in resource elements of RBs #2, #6, #10 in symbols #4, #5. Also, in the example in the right side in FIG. 7, the user equipment 100 mutes resource elements of RBs #1, #5, #9 in symbols #5, #6, that is, does not transmit the uplink data channel, and transmits the UL DMRS in resource elements of RBs #2, #6, #10 in symbols #5, #6. Such mapping of the downlink and uplink radio resources allows the DL DMRS and the UL DMRS to be transmitted without occurrence of the inter-cell interference and the crosslink interference. As a result, the muted radio resources can be used for covariance estimation for the crosslink interference, and the DL DMRS and the UL DMRS can be used for covariance estimation for the inter-cell interference.

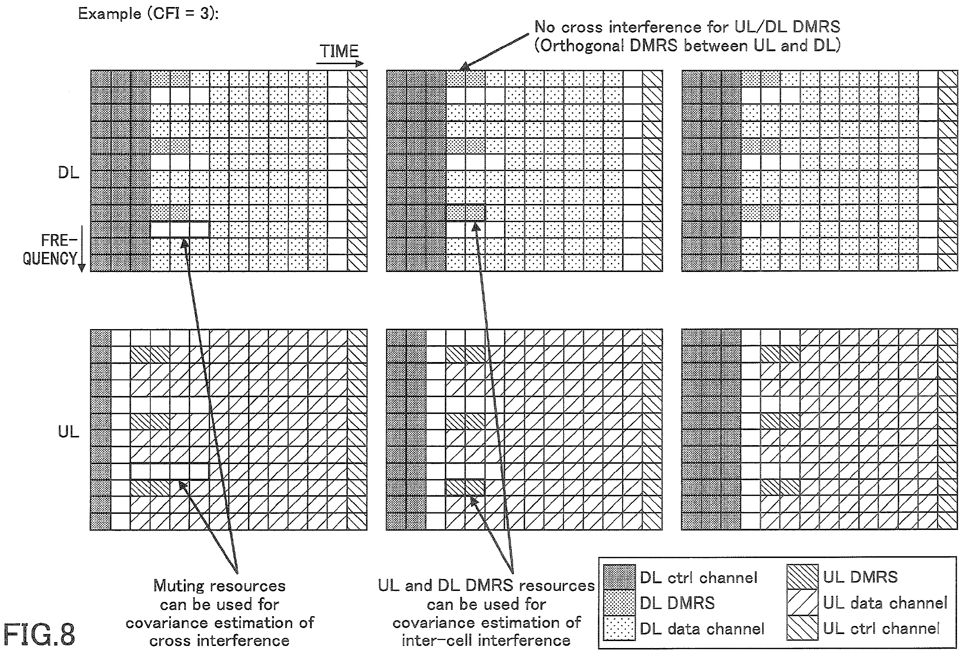

Also, as illustrated in FIG. 8, the base station 200 transmits a downlink control channel in symbols #1 to #3 in a subframe (CFI = 3) and a DL DMRS in resource elements of RBs #1, #5, #9 and mutes resource elements of RBs #2, #6, #10 in symbols #4 to #6. In other words, the base station does not transmit a downlink data channel. On the other hand, the user equipment 100 receives the downlink control channel in symbol #1 (the example in the left side in FIG. 8), symbols #1, #2 (the example in the middle in FIG. 8) or symbols #1 to #3 (the example in the right side in FIG. 8) in the corresponding subframe depending on a variable transmission amount of downlink control information and configures a symbol immediately after the symbols for the downlink control channel as a guard period. In the illustrated example in the left side in FIG. 8, the user equipment 100 mutes resource elements of RBs #1, #5, #9 in symbols #3 to #6, that is, does not transmit the uplink data channel, and transmits an UL DMRS in resource elements of RBs #2, #6, #10 in symbols #3, #4. Also, in the example in the middle in FIG. 8, the user equipment 100 mutes resource elements of RBs #1, #5, #9 in symbols #4 to #6, that is, does not transmit the uplink data channel, and transmits the UL DMRS in resource elements of RBs #2, #6, #10 in symbols #4, #5. Also, in the example in the right side in FIG. 8, the user equipment 100 mutes resource elements of RBs #1, #5, #9 in symbols #5, #6, that is, does not transmit the uplink data channel, and transmits the UL DMRS in resource elements of RBs #2, #6, #10 in symbols #5, #6. Such mapping of the downlink and uplink radio resources allows the DL DMRS and the UL DMRS to be transmitted without occurrence of the inter-cell interference and the crosslink interference. As a result, the muted radio resources can be used for covariance estimation for the crosslink interference, and the DL DMRS and the UL DMRS can be used for covariance estimation for the inter-cell interference.

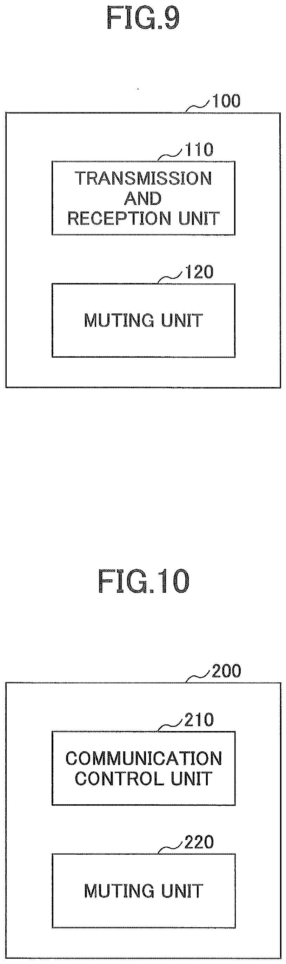

Next, a user equipment according to one embodiment of the present invention is described with reference to FIG. 9. FIG. 9 is a block diagram for illustrating a functional arrangement of the user equipment according to one embodiment of the present invention. The user equipment 100 according to this embodiment is communicatively connected to the base station 201 and performs radio communication to the base station 201 to avoid or alleviate the inter-cell interference and/or the crosslink interference due to radio communication between the adjacent base station 200 and the user equipment 101 in accordance with the dynamic TDD. In the embodiments below, it is focused on, without being limited to it, that uplink transmission is assigned for radio communication between the user equipment 100 and the base station 201 in accordance with the dynamic TDD, and downlink transmission is assigned for radio communication between the user equipment 101 and the base station 200 in accordance with the dynamic TDD.

As illustrated in FIG. 9, the user equipment 100 has a transmission and reception unit 110 and a muting unit 120.

The transmission and reception unit 110 transmits and receives radio signals to and from the base station 201 in accordance with a communication scheme, where uplink communication and downlink communication are dynamically switched, and transmits a demodulation reference signal in radio resources indicated from the base station 201. One example of the communication scheme includes the dynamic TDD where uplink communication and downlink communication are dynamically switched with respect to a time domain. In the dynamic TDD, both end periods in a time interval are fixedly configured for the downlink communication and the uplink communication, and the uplink/downlink communication is dynamically configured in a period sandwiched between these ends. Specifically, the transmission and reception unit 110 transmits and receives an uplink signal and a downlink signal while dynamically switching between the downlink communication and the uplink communication in a predetermined time interval. Here, the time interval may be any appropriate time interval such as a subframe, a slot and a mini slot.

The muting unit 120 mutes an uplink radio resource indicated from the base station 201. Here, the muted uplink radio resources correspond to downlink radio resources for transmitting a downlink demodulation reference signal following a downlink control channel at the adjacent base station 200. Specifically, the muting unit 120 mutes partial radio resources for the uplink data channel indicated from the base station 201, and the muted radio resources correspond to radio resources where the adjacent base station 200 can transmit the DL DMRS.

For example, as stated above in conjunction with FIGS. 7 and 8, in a subframe assigned for uplink transmission in accordance with the dynamic TDD, the transmission and reception unit 110 first transmits the downlink control channel with a number of signals corresponding to a variable CFI and configures one symbol immediately after the transmission as a guard period. Then, the transmission and reception unit 110 transmits the UL DMRS in radio resources (resource elements) for the uplink data channel indicated from the base station 201. Also, the muting unit 120 mutes radio resources (resource elements) for the uplink data channel indicated from the base station 201, that is, sets transmit power for the uplink data channel in the radio resources to zero. The muted radio resources are configured at least from resource elements immediately after resource elements for the downlink control channel and the guard period to resource elements corresponding to the sum of the number of symbols corresponding to the maximum CFI and the number of symbols for the DL DMRS at the adjacent base station 200.

Note that the base station 201 may configure the maximum CFI value and/or the minimum CFI value for the user equipment 100. For example, the maximum CFI value and/or the minimum CFI value may be indicated to the user equipment 100 by upper layer signaling. In this case, the muting unit 120 may determine which radio resources are to be muted based on the indicated CFI value. For example, less radio resources in the case of the maximum CFI value of 2 can be configured than in the case of the maximum CFI value of 3, and overhead involved in the muting can be reduced.

In one embodiment, a radio resource for a demodulation reference signal (UL DMRS) and a muted radio resource may be indicated in upper layer signaling. For example, the radio resource for the UL DMRS and the muted radio resource may be indicated in RRC (Radio Resource Control) signaling. Also, the radio resource for the UL DMRS and the muted radio resource may be separately indicated, for example, by specifying a bitmap, a predetermined pattern or the like. Alternatively, the radio resource for the UL DMRS and the muted radio resource may be together indicated by a joint pattern.

In other embodiments, a radio resource for a demodulation reference signal (UL DMRS) and a muted radio resource may be indicated in L1 signaling. For example, the radio resource for the UL DMRS and the muted radio resource may be indicated in downlink control information (DCI). Also, the DCI transmitted in the same time and/or frequency resource as a data channel (for example, a carrier frequency and/or a component carrier in LTE) may be used. Alternatively, the DCI transmitted in a different time and/or frequency resource from the data channel may be used.

Also, in other embodiments, a radio resource for a demodulation reference signal (UL DMRS) and a muted radio resource may be indicated in a combination of upper signaling and L1 signaling. For example, a set of muted patterns (joint patterns) may be signaled by an upper layer, and the pattern for use in a subframe may be signaled in the DCI.

Also, in other embodiments, a radio resource for a demodulation reference signal (UL DMRS) and a muted radio resource may be predefined in specifications. In this case, overhead required for the above-stated signaling can be avoided.

Next, a base station according to one embodiment of the present invention is described with reference to FIG. 10. FIG. 10 is a block diagram for illustrating a functional arrangement of a base station according to one embodiment of the present invention. The base station 200 according to this embodiment is communicatively connected to the user equipment 101 and performs radio communication with the user equipment 101 so that the inter-cell interference and/or the crosslink interference due to radio communication between the adjacent base station 201 and the user equipment 100 in accordance with the dynamic TDD can be avoided or alleviated. In the following embodiments, it is focused on without limitation that similar to the situation as stated above in conjunction with FIG. 9, downlink transmission is assigned in the radio communication between the user equipment 101 and the base station 200 in accordance with the dynamic TDD while uplink transmission is assigned in the radio communication between the user equipment 100 and the base station 201 in accordance with the dynamic TDD.

As illustrated in FIG. 10, the base station 200 has a communication control unit 210 and a muting unit 220.

The communication control unit 210 controls radio communication with the user equipment 101 in accordance with a communication scheme where uplink communication and downlink communication are dynamically switched, and transmits a demodulation reference signal to the user equipment 101 in a radio resource where the adjacent user equipment 100 performing radio communication with the adjacent base station 201 does not perform uplink transmission. One example of the communication scheme includes the dynamic TDD where uplink communication and downlink communication are dynamically switched with respect to a time domain. In the dynamic TDD, both end periods in a time interval are fixedly configured for the downlink communication and the uplink communication, and the uplink/downlink communication is dynamically configured in a period sandwiched by these ends. Specifically, the communication control unit 210 transmits and receives a downlink signal and an uplink signal in accordance with the dynamic TDD while dynamically switching between the downlink communication and the uplink communication at a predetermined time interval. Here, the time interval may be any appropriate time interval such as a subframe, a slot, a mini slot or the like.

The muting unit 220 mutes a downlink radio resource and specifically mutes a downlink radio resource corresponding to a radio resource where the adjacent user equipment 100 performs uplink transmission. Here, the muted downlink radio resource corresponds to an uplink radio resource to transmit an uplink demodulation reference signal after a downlink control channel and a guard period for the adjacent user equipment 100. Specifically, the muting unit 220 mutes a part of radio resources for a downlink data channel. The muted radio resource corresponds to a radio resource where the adjacent user equipment 100 can transmit the UL DMRS, and the muting unit 220 specifically mutes downlink radio resources corresponding to a maximum amount of radio resources (the maximum CFI value) for the user equipment 100 to transmit the downlink control channel.

As stated above in conjunction with FIGS. 7 and 8, the communication control unit 210 transmits the downlink control channel with a number of signals corresponding to a variable CFI in a subframe assigned for downlink transmission in accordance with the dynamic TDD. Then, the communication control unit 210 transmits the DL DMRS in a part of radio resources (resource elements) for a downlink data channel. Also, the muting unit 220 mutes a part of radio resources (resource elements) for the downlink data channel, that is, sets transmit power for the downlink data channel in the radio resources to zero. The muted radio resources are configured at least from a resource element immediately after resource elements for the downlink control channel to a resource element corresponding to the sum of the number of symbols corresponding to the maximum CFI at the adjacent base station 201 and the number of symbols for the UL DMRS.

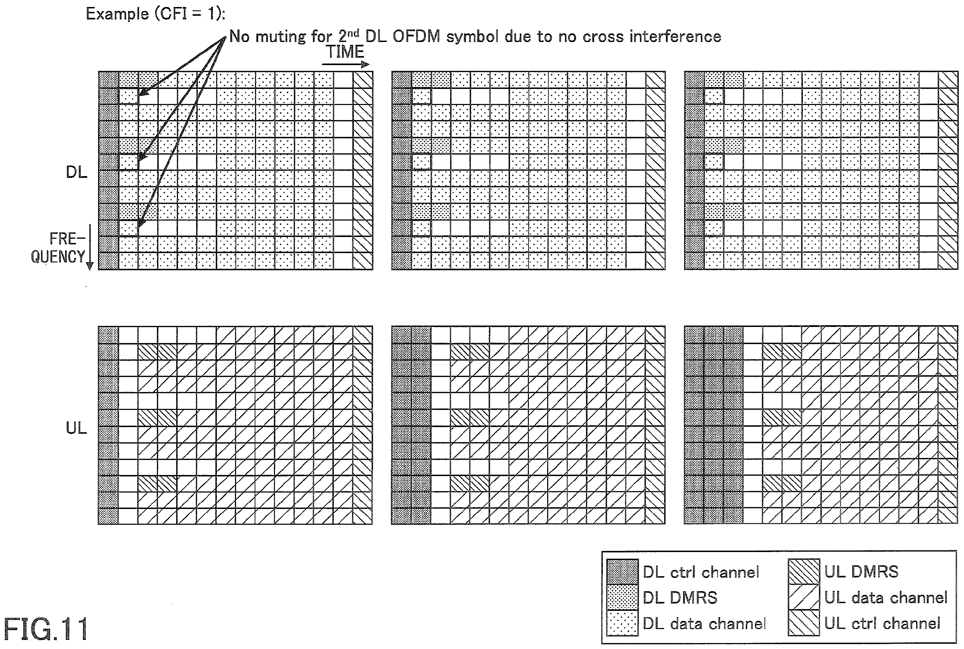

Next, various mapping examples of the DL/UL DMRS are described with reference to FIGS. 11 to 23.

In the mapping example as illustrated in FIG. 11, compared with the mapping example as illustrated in FIG. 7, resource elements of RB #2 in symbols #2, #6, #10 in a downlink subframe from the base station 200 are assigned for transmission of a downlink data channel without being muted. The corresponding resource elements in an uplink subframe at the user equipment 100 are assigned for a guard period or a downlink control channel, and in any of these cases, the crosslink interference due to transmission of the downlink data channel from the base station 200 cannot arise. As a result, the resource elements may be used to transmit the downlink data channel so as to reduce overhead resulting from muting.

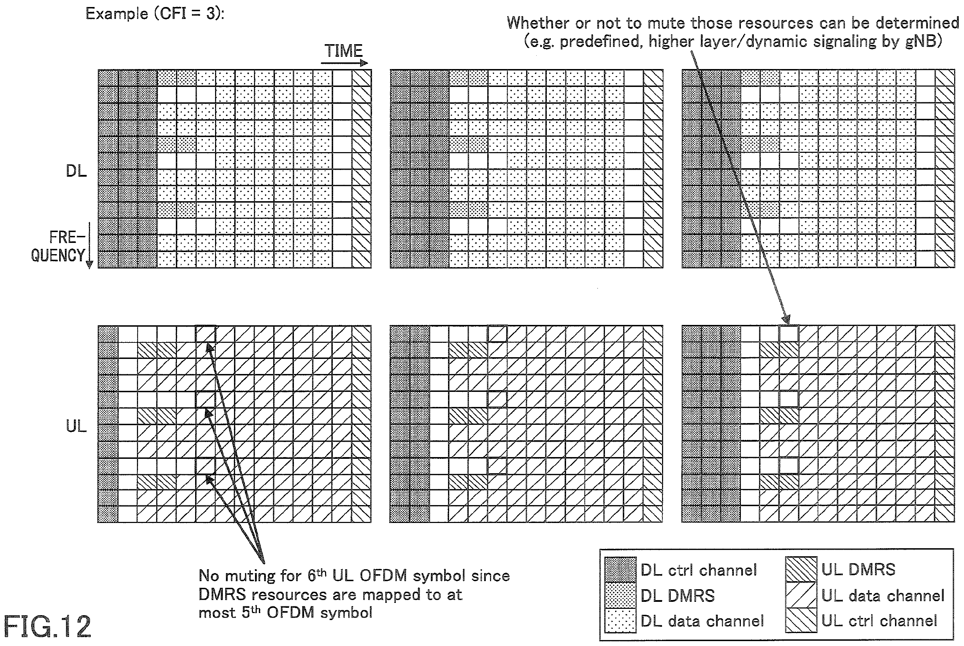

Also, in the mapping example as illustrated in FIG. 12, compared with the mapping example as illustrated in FIG. 8, resource elements of RBs #1, #5, #9 in symbol #6 in an uplink subframe from the user equipment 100 are assigned for transmission of an uplink data channel without being muted. It is considered that the corresponding resource elements in a downlink subframe at the base station 200 are assigned for transmission of a downlink data channel after transmission of the DL DMRS and the DL DMRS is appropriately transmitted without interference from the adjacent cell. Accordingly, the resource elements may be used to transmit the uplink data channel so as to reduce overhead due to muting. Note that as illustrated in the right side illustration in FIG. 12, it may be preconfigured in specifications or be configured by signaling from the base station 201 whether the resource elements are muted, for example.

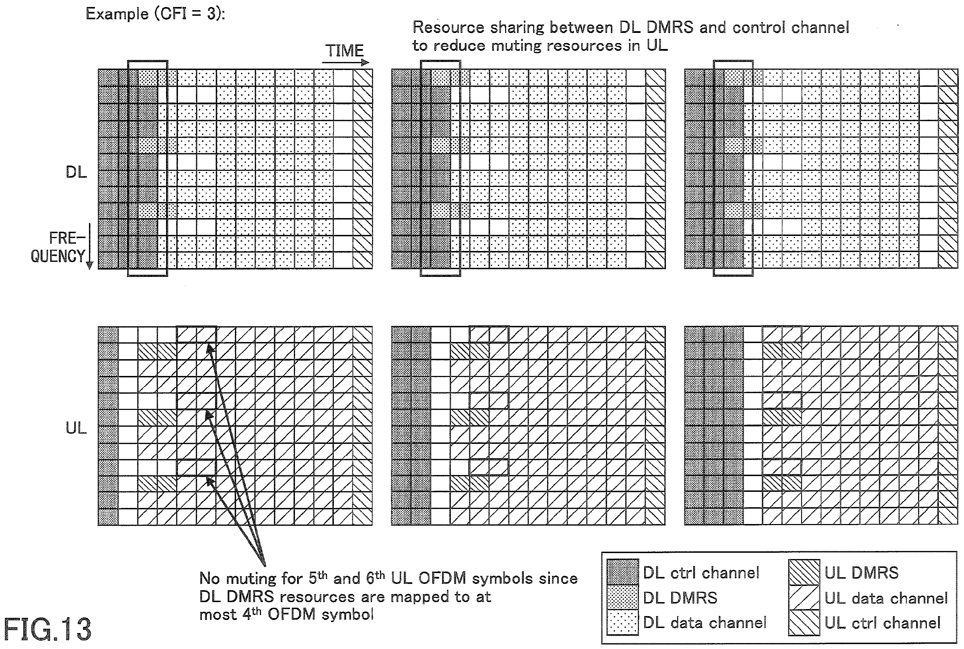

Also, in the mapping example as illustrated in FIG. 13, compared with the mapping example as illustrated in FIG. 8, resource elements of RB #3 in symbols #1, #5, #9 in a downlink subframe from the base station 200 are assigned for transmission of the DL DMRS instead of the downlink control channel. Resource elements in an uplink subframe at the user equipment 100 are muted resource elements, resource elements for a guard period or resource elements for the downlink control channel, and the crosslink interference cannot arise from transmission of the DL DMRS from the base station 200. As a result, the resource elements may be used for transmission of the DL DMRS so as to reduce overhead due to muting. Also, resource elements of RBs #1, #5, #9 in symbols #5, #6 in an uplink subframe from the user equipment 100 are assigned for transmission of the uplink data channel without being muted. It is considered that the corresponding resource elements in a downlink subframe at the base station 200 are assigned for transmission of the downlink data channel after transmission of the DL DMRS and the DL DMRS is appropriately transmitted without interference from the adjacent cell. Accordingly, the resource elements may be used to transmit the uplink data channel so as to reduce overhead due to muting.

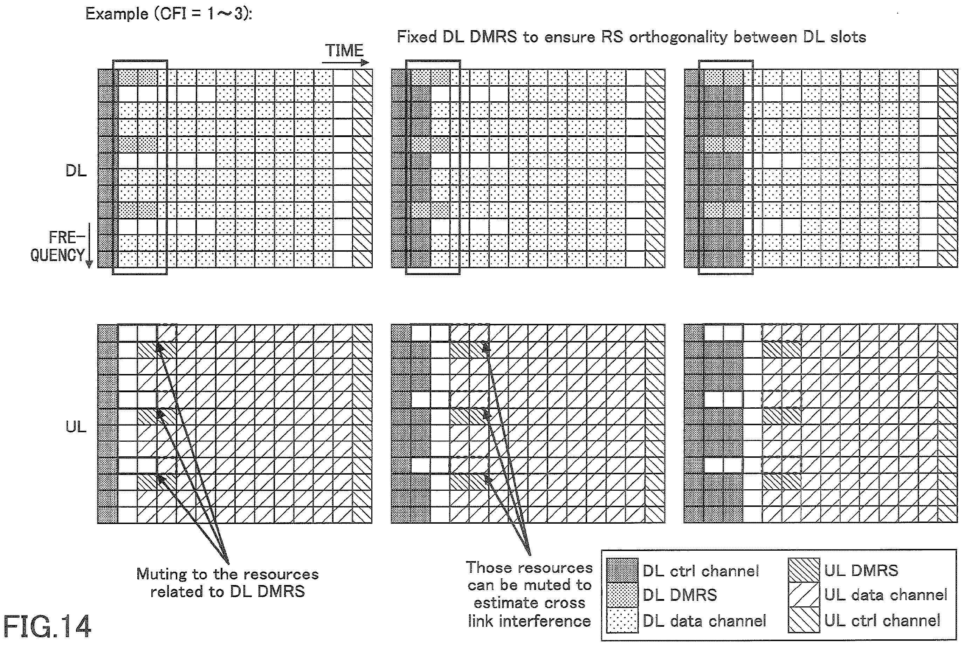

Also, in the mapping example as illustrated in FIG. 14, compared with the mapping example as illustrated in FIG. 13, although the number of symbols for transmitting the downlink control channel varies (CFI = 1 to 3), resource elements of RBs #1, #5, #9 in symbols #2, #3 in a downlink subframe from the base station 200 are assigned for transmission of the DL DMRS instead of the downlink control channel and/or the downlink data channel. In other words, the DL DMRS is transmitted in fixed resource elements (for example, resource elements in a symbol immediately after the minimum CFI value) regardless of the CFI value. Also, in an uplink subframe from the user equipment 100, fixed resource elements of RBs #1, #5, #9 in symbols #2, #3 corresponding to the fixed resource elements for the DL DMRS are muted. In this manner, the DL DMRS is transmitted in the predetermined resource elements in the downlink subframe regardless of the CFI value, and the predetermined resource elements in the uplink subframe are muted, which can simplify radio resource assignment. Note that as illustrated, the fixedly muted resource elements and/or the resource elements immediately after the guard period in the uplink subframe may be muted to estimate the crosslink interference.

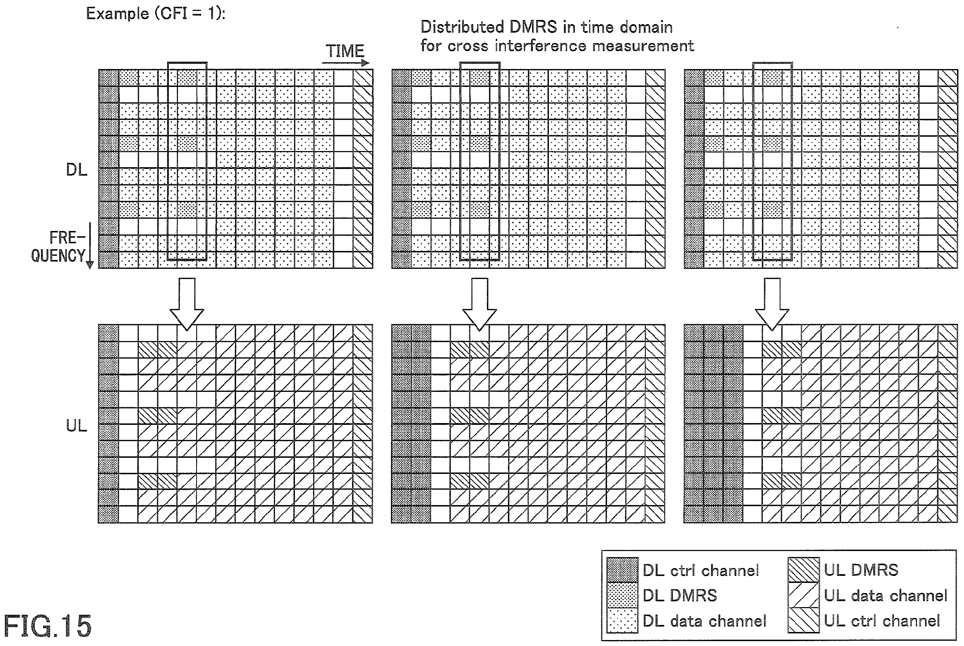

Also, in the mapping example as illustrated in FIG. 15, compared with the mapping example as illustrated in FIG. 7, the DL DMRS is transmitted in resource elements of RBs #1, #5, #9 in symbols #2, #5 in a downlink subframe from the base station 200 for time-spreading. The corresponding resource elements in an uplink subframe at the user equipment 100 are muted, and the crosslink interference cannot arise from transmission of the DL DMRS from the base station 200. Also, since the DL DMRS is time-spread, channel correction can be performed in a time domain. Also, the inter-cell interference can be estimated due to the spread DL DMRS without depending on the CFI.

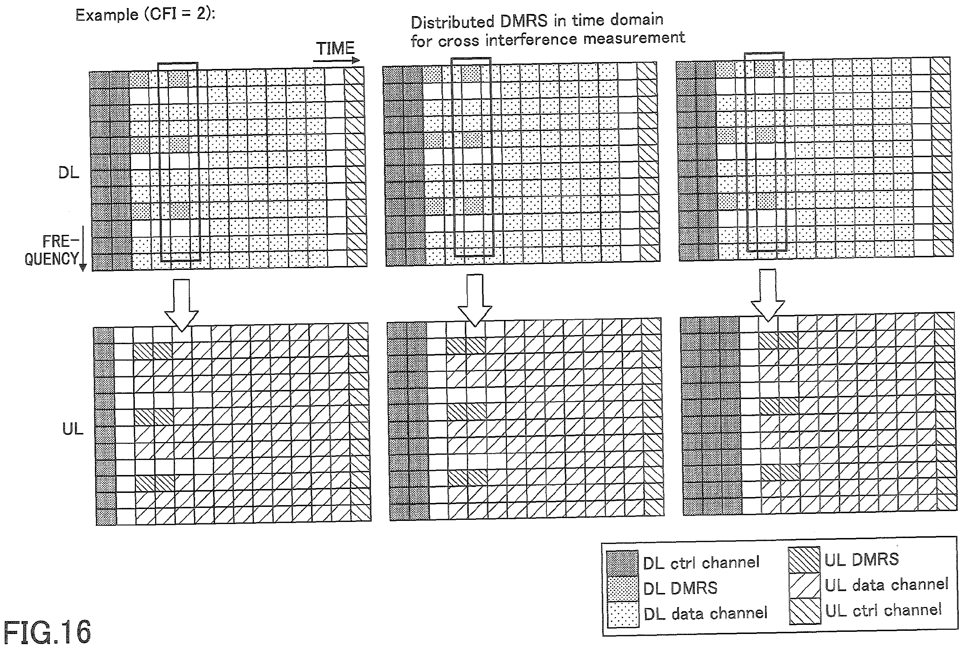

Also, in the mapping example as illustrated in FIG. 16, compared with the mapping example as illustrated in FIG. 15, the base station 200 transmits a downlink control channel in symbols #1, #2 in a downlink subframe (CFI = 2) and then transmits the time-spread DL DMRS. Similar to the mapping example as illustrated in FIG. 15, the corresponding resource elements in an uplink subframe at the user equipment 100 are muted, and the crosslink interference cannot arise from transmission of the DL DMRS from the base station 200. Also, since the DL DMRS is time-spread, channel correction can be performed in a time domain. Also, the inter-cell interference can be estimated due to the spread DL DMRS without depending on the CFI.

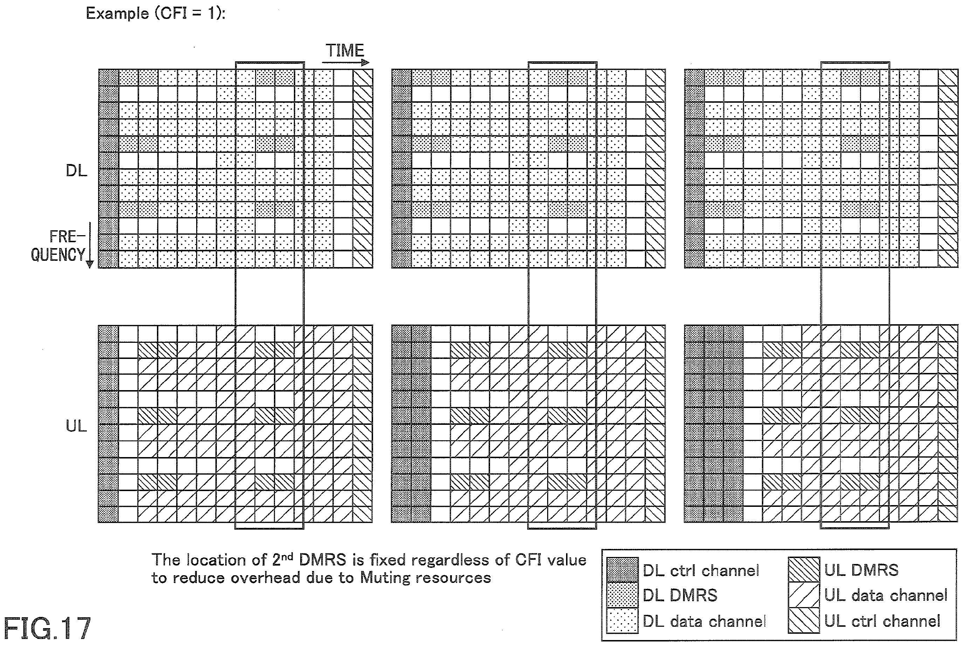

Also, in the mapping example as illustrated in FIG. 17, compared with the mapping example as illustrated in FIG. 7, in addition to the front-loaded DL/UL DMRS, a time-spread second DL/UL DMRS is transmitted in fixed resource elements. For example, the base station 200 transmits the second DL DMRS in resource elements of RBs #1, #5, #9 in symbols #9, #10 and mutes a downlink data channel in resource elements of RBs #2, #6, #10 in symbols #9, #10. On the other hand, the user equipment 100 mutes an uplink data channel in resource elements of RBs #1, #5, #9 in symbols #9, #10 and transmits the UL DMRS in resource elements of RBs #2, #6, #10 in symbols #9, #10. In this manner, the DL/UL DMRS time-spread in the predetermined resource elements regardless of the CFI value is transmitted, and channel correction can be performed in a time domain.

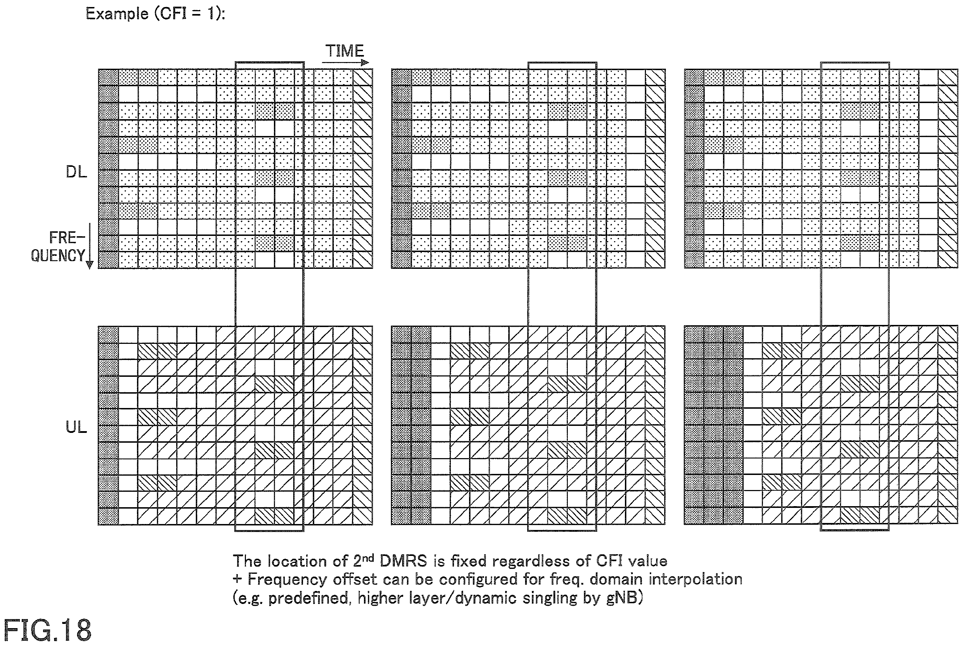

Also, in the mapping example as illustrated in FIG. 18, compared with the mapping example as illustrated in FIG. 17, in addition to the front-loaded DL/UL DMRS, a frequency-spread second DL/UL DMRS is transmitted in fixed resource elements. For example, the base station 200 transmits the second DL DMRS in resource elements of RBs #3, #7, #11 in symbols #9, #10 and mutes a downlink data channel in resource elements of RBs #4, #8, #11 in symbols #9, #10. On the other hand, the user equipment 100 mutes an uplink data channel in resource elements of RBs #3, #7, #11 in symbols #9, #10 and transmits the UL DMRS in resource elements of RBs #4, #8, #11 in symbols #9, #10. In this manner, the DL/UL DMRS frequency-spread and time-spread in the predetermined resource elements regardless of the CFI value is transmitted, and channel correction can be performed in frequency and time domains.

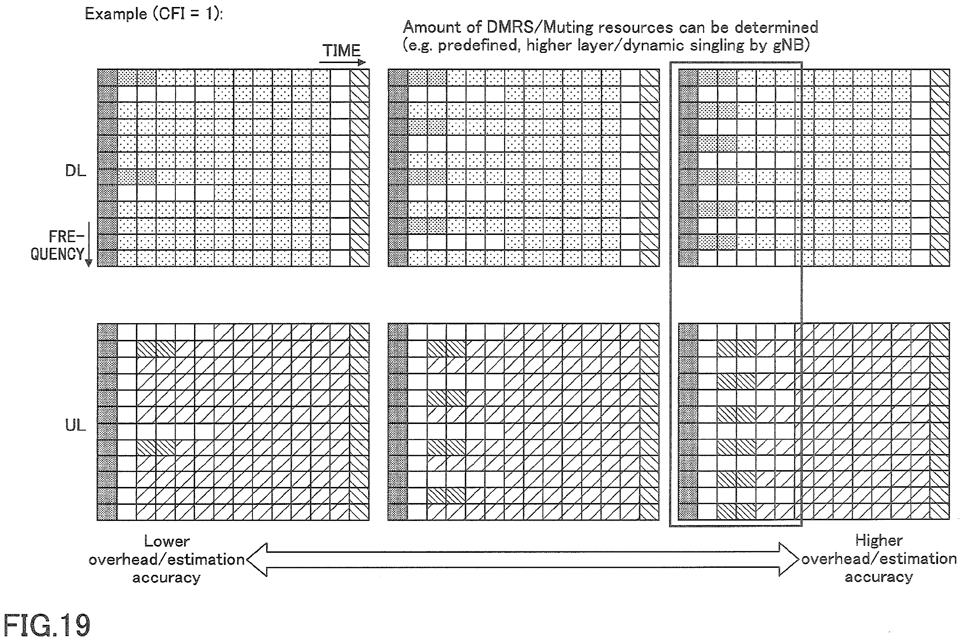

Also, in the mapping example as illustrated in FIG. 19, the DL/UL DMRS may be frequency-spread at different densities. In the embodiment as illustrated in the left side illustration in FIG. 19, similar to the mapping example as illustrated in the left side illustration in FIG. 7, the DL/UL DMRS frequency-spread in the frequency direction over two sets of resource elements, each of which includes two contiguous resource elements in the time direction, is transmitted, and the corresponding resource elements are muted. Also, in the embodiment as illustrated in the middle illustration in FIG. 19, the DL/UL DMRS frequency-spread in the frequency direction over four sets of resource elements, each of which includes two contiguous resource elements in the time direction, is transmitted, and the corresponding resource elements are muted. Also, in the embodiment as illustrated in the right side illustration in FIG. 19, the DL/UL DMRS frequency-spread in the frequency direction over eight sets of resource elements, each of which includes two contiguous resource elements in the time direction, is transmitted, and the corresponding resource elements are muted. As can be easily understood, according to the respective mapping examples as illustrated in FIG. 19, in the mapping example as illustrated in the left side illustration, overhead involved in the muting is lower while channel estimation accuracy is lower. On the other hand, in the mapping example as illustrated in the right side illustration, the overhead involved in the muting is higher while the channel estimation accuracy is higher.

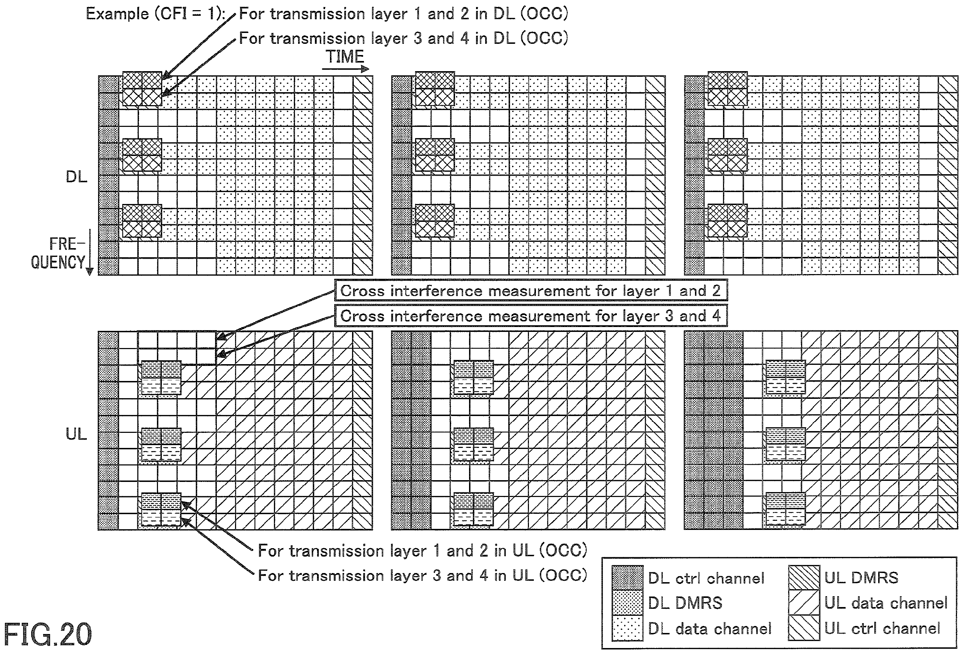

Also, as illustrated in FIG. 20, the DL/UL DMRS may be layered. Specifically, compared with the mapping example as illustrated in FIG. 7, in a downlink subframe from the base station 200, resource elements of RBs #1, #2, resource elements of RBs #5, #6 and resource elements of RBs #9, #10 in symbols #2, #3 are layered into transmission layers 1 to 4, respectively, and are assigned for transmission of the DL DMRS instead of a downlink data channel, and resource elements of RBs #3, #4, #7, #8, #11, #12 in symbols #2 to #6 are muted. On the other hand, in an uplink subframe from the user equipment 100, resource elements of RBs #1, #2 from a symbol immediately after the guard period to symbol #6 are muted, and resource elements of RBs #3, #4, resource elements of RBs #7, #8 and resource elements of RBs #11, #12 in two symbols immediately after the guard period are layered into transmission layers 1 to 4, respectively, and are assigned for transmission of the UL DMRS instead of an uplink data channel.

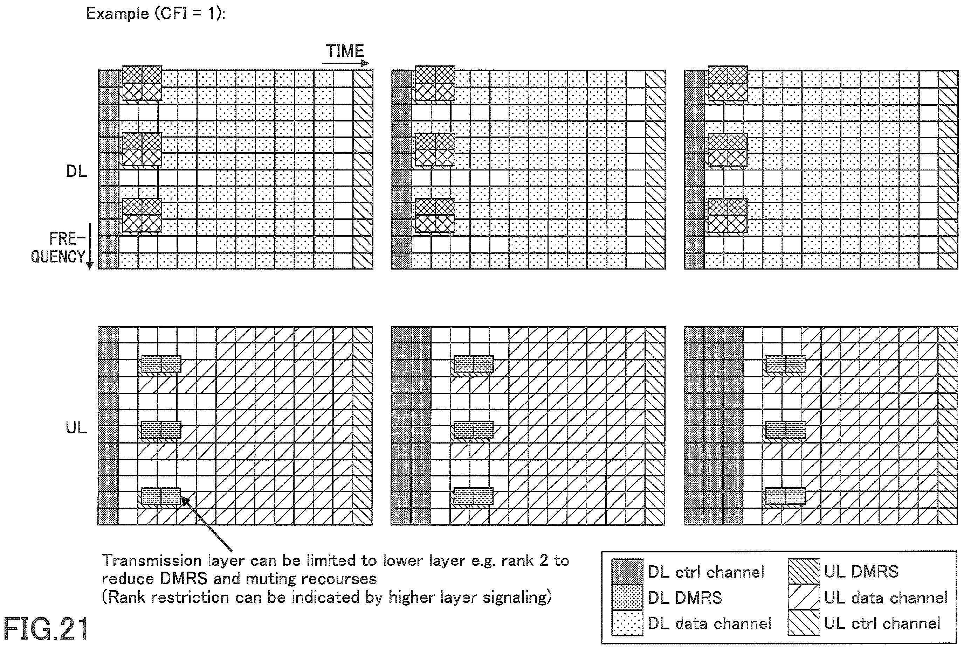

As illustrated in FIG. 21, the DL DMRS and the UL DMRS may be layered at different rank numbers. Specifically, in an uplink subframe from the user equipment 100, resource elements of RBs #1, #2 from the symbol immediately after the guard period to symbol #6 are muted, similar to the mapping example as illustrated in FIG. 20. On the other hand, the number of transmission layers is limited to 2, and resource elements of RB #3, resource elements of RB #7 and resource elements of RB #11 in two symbols immediately after the guard period are layered into transmission layers 1 and 2, respectively, and are assigned for transmission of the UL DMRS instead of an uplink data channel.

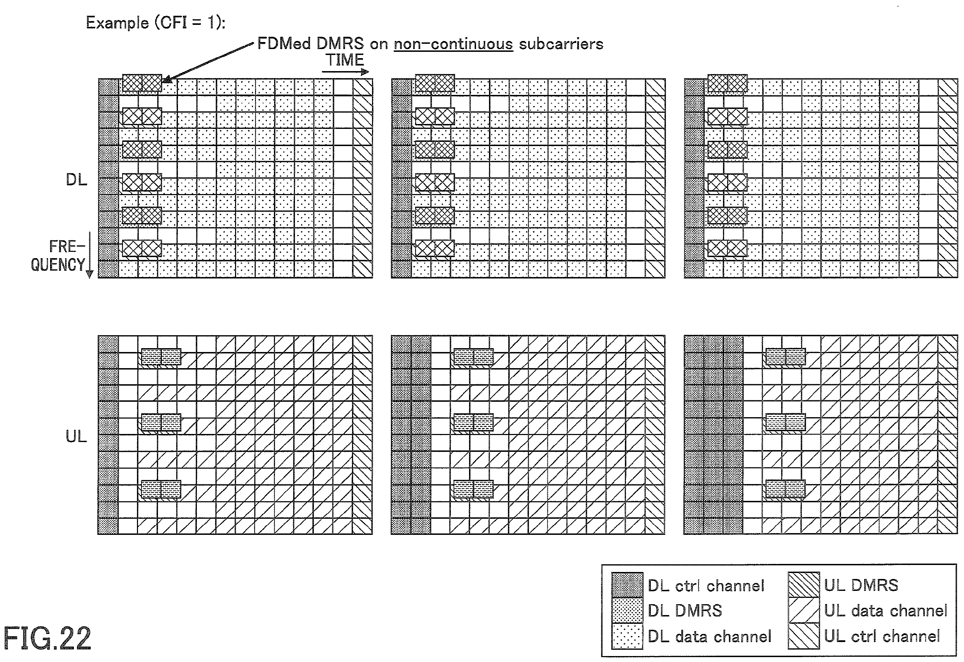

Also, as illustrated in FIG. 22, the layered DL/UL DMRS may be frequency-spread. For example, the layered DL/UL DMRS may be transmitted in non-contiguous RBs or subcarriers. Specifically, in a downlink subframe from the base station 200, resource elements of RB #1, resource elements of RB #3, resource elements of RB #5, resource elements of RB #7, resource elements of RB #9 and resource elements of RB #11 in symbols #2, #3 are layered and assigned for transmission of the DL DMRS instead of a downlink data channel. Also, resource elements of RBs #2, #6, #10 in symbols #2 to #6 are muted. On the other hand, in an uplink subframe from the user equipment 100, resource elements of RBs #1, #3, #5, #7, #9, #11 from the symbol immediately after the guard period to symbol #6 are muted, and resource elements of RB #2, resource elements of RB #6 and resource elements of RB #10 in two symbols immediately after the guard period are layered and assigned for transmission of the UL DMRS instead of an uplink data channel.

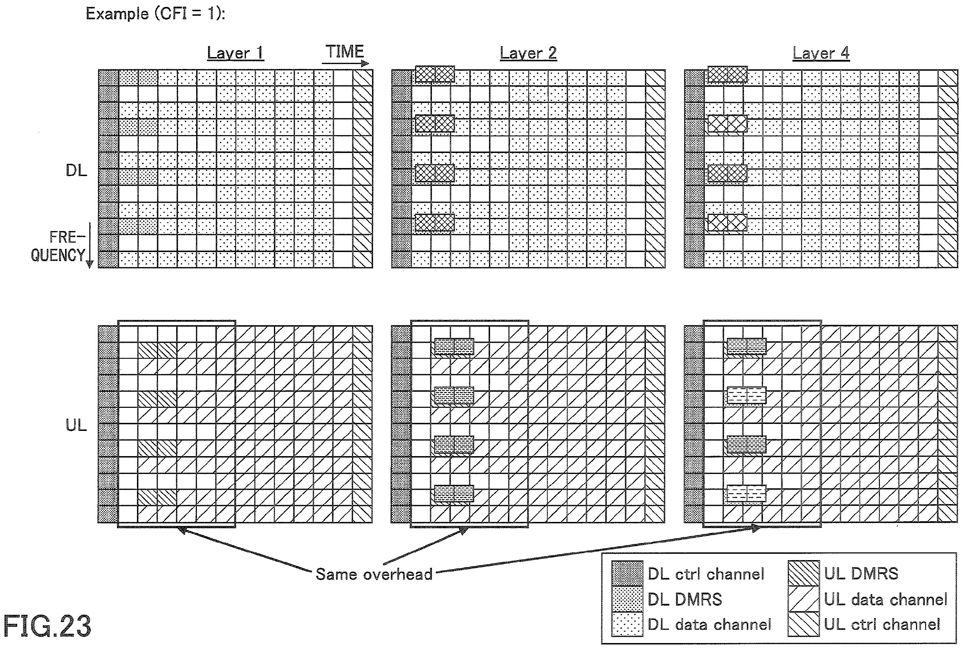

Also, as illustrated in FIG. 23, the DL/UL DMRS may be transmitted at different layer numbers. Specifically, the DL/UL DMRS may be transmitted at layer number 1 in a certain subframe, at layer number 2 in another subframe and at layer number 4 in still another subframe. In the illustrated mapping example, the number of resource elements for transmitting the DL/UL DMRS is the same as the number of muted resource elements over these subframes. Accordingly, the overhead involved in the muting is the same while the channel estimation accuracy is different.

The above-stated subframes including the muted radio resources may be configured in a time domain and/or a frequency domain. Specifically, the transmission and reception unit 110 and the communication control unit 210 may transmit the subframes including the muted radio resources in the configured time domain and frequency domain. Subframes and/or resource blocks for transmitting measurement subframes including the muted radio resources for measuring the inter-cell interference and/or the crosslink interference may be configured.

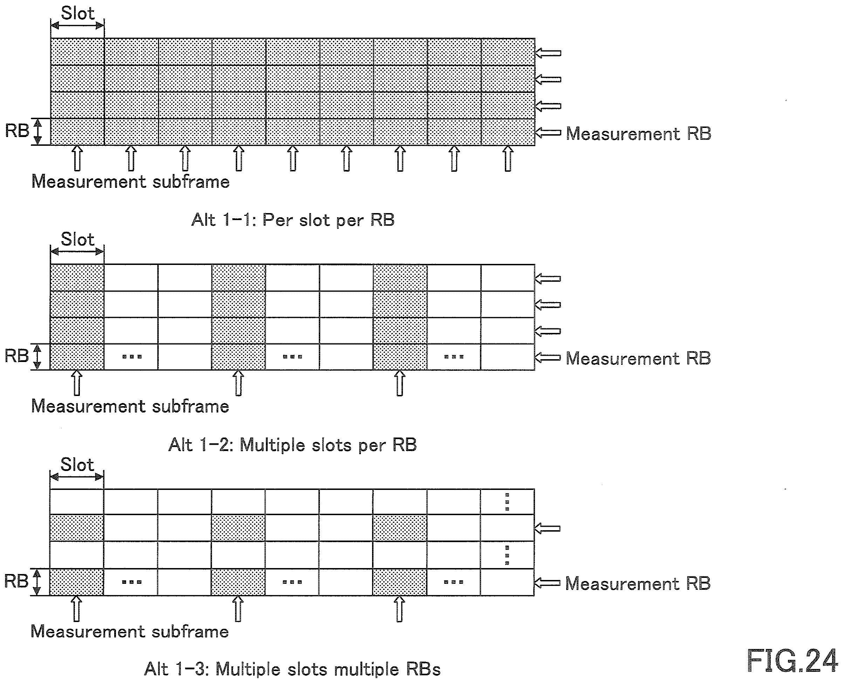

In one embodiment, a measurement subframe may be periodically configured. For example, as illustrated in Alt 1-1 in FIG. 24, the measurement subframe may be transmitted in all subframes. Specifically, the measurement subframe may be transmitted on a per-slot basis or on a per-resource block basis. Also, the measurement subframe may be transmitted in multiple slots on a per-resource block basis. For example, as illustrated in Alt 1-2, the measurement subframe may be transmitted periodically with respect to the time direction in the whole frequency domain. Also, the measurement subframe may be transmitted in multiple slots on a per-multiple resource block basis. For example, as illustrated in Alt 1-3, the measurement subframe may be transmitted periodically with respect to the time direction in a partial frequency domain.

In other embodiments, the measurement subframe may be configured non-periodically. For example, the measurement subframe may be semi-statically or dynamically configured in a predetermined period.

In this manner, resource efficiency can be improved by adjusting transmission opportunities of the measurement subframe including the muted radio resources. Also, according to the above-stated embodiments, the orthogonal DL/UL DMRS can be transmitted without need of DMRS coordination among cells regardless of the variable CFI value. Furthermore, receivers (such as a MMSE-IRC (Minimum Mean Square Error-Interference Rejection Combining) receiver) need to be only designed to support the maximum CFI defined in the specifications, and the arrangement of the receivers can be simplified.

Although the above-stated embodiments have been described in conjunction with the dynamic TDD, the present invention is not limited to it, and any communication scheme where uplink communication and downlink communication are dynamically switched with respect to the time domain may be applied. Also, the present invention may be applied to any communication scheme where radio resources are dynamically switched between uplink communication and downlink communication with respect to the frequency domain, such as dynamic FDD, full duplex or the like.

Here, the block diagrams for use in the above description of embodiments show blocks for functional units. These functional blocks (components) are implemented in any combination of hardware and/or software items. Also, the implementations of the respective functional blocks are not particularly limited. In other words, the respective functional blocks may be implemented in a physically and/or logically coupled single device or in multiple devices where two or more physically and/or logically separated devices are connected directly and/or indirectly (for example, in wired and/or wireless manners).

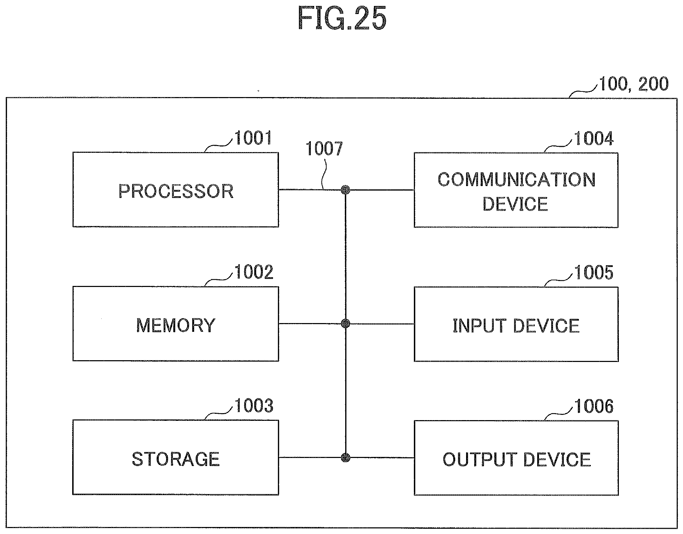

For example, the user equipment 100 and the base stations 201, 202 according to one embodiment of the present invention may function as a computer processing the radio communication method according to the present invention. FIG. 25 is a block diagram for illustrating a hardware arrangement of the user equipments 100, 101 and the base stations 201, 202 according to one embodiment of the present invention. The user equipments 100, 101 and the base stations 200, 201 as stated above may each be physically arranged as a computer device including a processor 1001, a memory 1002, a storage 1003, a communication device 1004, an input device 1005, an output device 1006, a bus 1007 or the like.

Note that the language "apparatus" can be interchangeably read as a circuit, a device, a unit or the like. The hardware arrangement of the user equipments 100, 101 and the base stations 201, 202 may each be arranged to include one or more of the illustrated devices or without including a part of the devices.

Respective functions in the user equipments 100, 101 and the base stations 201, 202 are implemented by loading a predetermined software item (program) into hardware items such as the processor 1001 and the memory 1002 to cause the processor 1001 to execute operations, perform communication with the communication device 1004 and control read and/or write operations on data from/in the memory 1002 and the storage 1003.

The processor 1001 runs an operating system to control the whole computer, for example. The processor 1001 may be arranged with a central processing unit (CPU) including an interface with a peripheral device, a control device, a calculation device, a register and the like. For example, the above-stated components may be implemented in the processor 1001.

Also, the processor 1001 loads programs (program codes), software modules and data from the storage 1003 and/or the communication device 1004 into the memory 1002 and executes various operations in accordance with them. As the programs, programs for causing the computer to perform at least a part of operations as described in the above embodiments are used. For example, operations by the components in the user equipments 100, 101 and the base stations 201, 202 may be implemented with control programs stored in the memory 1002 and executed by the processor 1001, and other functional blocks may be similarly implemented. It has been described that the above-stated various operations are performed by the single processor 1001, but they may be performed with two or more processors 1001 simultaneously or sequentially. The processor 1001 may be implemented with one or more chips. Note that the programs may be transmitted from a network via an electric communication line.

The memory 1002 is a computer-readable storage medium and may be arranged with at least one of a ROM (Read Only Memory), an EPROM (Erasable Programmable ROM), an EEPROM (Electrically Erasable Programmable ROM), a RAM (Random Access Memory) or the like, for example. The memory 1002 may be referred to as a register, a cache, a main memory (main storage device) or the like. The memory 1002 can store programs (program codes), software modules or the like that can be executed to implement the radio communication method according to one embodiment of the present invention.

The storage 1003 is a computer-readable storage medium and may be arranged with at least one of an optical disk such as a CD-ROM (Compact Disc ROM), a hard disk drive, a flexible disk, a magnetic optical disk (for example, a compact disk, a digital versatile disk, a Blu-ray (registered trademark) disk), a smart card, a flash memory (for example, a card, a stick, a key drive), a floppy (registered trademark), a magnetic strip or the like. The storage 1003 may be referred to as an auxiliary storage device. The above-stated storage medium may be a database or a server including the memory 1002 and/or the storage 1003 or any other appropriate medium.

The communication device 1004 is a hardware item (transceiver device) for communication over computers via a wired and/or wireless network and may be also referred to as a network device, a network controller, a network card, a communication module or the like. For example, the above-stated components may be implemented in the communication device 1004.

The input device 1005 is an input device for receiving external inputs (for example, a keyboard, a mouse, a microphone, a switch, a button, a sensor or the like). The output device 1006 is an output device for providing external outputs (for example, a display, a speaker, a LED ramp or the like). Note that the input device 1005 and the output device 1006 may be integrally arranged (for example, a touch panel).

Also, the respective devices such as the processor 1001 and the memory 1002 are connected with each other via the bus 1007 for communicating information. The bus 1007 may be arranged with a single bus or different buses for different devices.

Also, the user equipments 100, 101 and the base stations 201, 202 may be arranged to include a hardware item such as a macro processor, a digital signal processor (DSP), an ASIC (Application Specific Integrated Circuit), a PLD (Programmable Logic Device), a FPGA (Field Programmable Gate Array) or the like, and a part or all of the functional blocks may be implemented in the hardware item. For example, the processor 1001 may be implemented with at least one of these hardware items.

Transmission of information is not limited to the embodiments/implementations as described in the present specification and may be made in any other manner. For example, information may be transmitted in physical layer signaling (for example, DCI (Downlink Control Information) and UCI (Uplink Control Information)), upper layer signaling (for example, RRC (radio Resource Control) signaling, MAC (medium Access Control) signaling, broadcast information (MIB (master Information Block) and SIB (System Information Block)) or any other signal or combinations thereof. Also, the RRC signaling may be referred to as an RRC message and may be an RRC Connection Setup message, an RRC Connection Reconfiguration message or the like.

The respective embodiments/implementations as described in the present specification may be applied to systems using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark) or any other appropriate system or next-generation systems enhanced based on them.

Procedures, sequences, flowcharts or the like of the respective embodiments/implementations as described in the present specification may be permutable, as long as there is not inconsistency. For example, for methods as described in the present specification, various steps are presented in an exemplary order, and the present invention is not limited to the presented certain order.

Certain operations performed by the base stations 200, 201 as described in the present specification may be performed by its upper node in some cases. In a network including one or more network nodes having base stations, various operations performed to communicate with terminals may be apparently performed by the base stations and/or network nodes other than the base stations (for example, a MME or an S-SW can be assumed, but the network nodes are not limited to them) . Although it has been described that the single network node other than the base stations is used in the above example, combinations of multiple other network nodes (for example, an MME and an S-GW) may be used.

Information and others may be output from an upper layer (or a lower layer) to a lower layer (or an upper layer) . They may be input and output via multiple network nodes.

Incoming and outgoing information and others may be stored in a certain location (for example, a memory) and/or managed in a management table. The incoming and outgoing information and others may be overwritten, updated or added. The outgoing information and others may be deleted. The incoming information and others may be transmitted to other device.

Determination may be made with a one-bit value (0 or 1), a Boolean value (true or false) or numerical comparison (for example, comparison with a predetermined value) .

The embodiments/implementations as described in the present specification may be used singularly or in combinations or switched in connection with execution. Also, indication of predetermined information (for example, indication "it is X") is not limited to explicit manners and may be performed implicitly (for example, the predetermined information is not indicated).

Although the present invention has been described in detail, it is apparent to those skilled in the art that the present invention is not limited to the embodiments as described in the present specification. The present invention can be implemented as modifications and variations without departing from the sprit and scope of the present invention as defined in claims. Thus, the description in the present specification is intended for exemplary description and does not mean any restriction to the present invention.

Software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function or the like regardless of the software being referred to as software, a firmware, a middleware, a microcode, a hardware descriptive language or other names.

Also, the software, the instruction or the like may be transmitted and received via a transmission medium. For example, if the software is transmitted from a website, a server or other remote sources by using wired techniques such as a coaxial cable, an optical fiber cable, a twist pair and a digital subscriber line (DSL) and/or wireless techniques such as infrared, radio frequency and microwave, these wired techniques and/or wireless techniques are included within definition of a transmission medium.

Information, signals or the like as described in the present specification may be represented with use of any of various different techniques. For example, data, an instruction, a command, information, a signal, a bit, a symbol, a chip and so on referred to throughout the above description may be represented with a voltage, a current, an electromagnetic wave, a magnetic field, a magnetic particle, an optical field, a photon or any combination thereof.

Note that terminologies described in the present specification and/or terminologies required to understand the present specification may be replaced with terminologies having the same or similar meanings. For example, a channel and/or a symbol may be a signal. Also, the signal may be a message. Also, a component carrier (CC) may be referred to as a carrier frequency, a cell or the like.

The terminologies "system" and "network" for use in the present specification are interchangeably used.

Also, information, a parameter and so on as described in the present specification may be represented with an absolute value, a relative value from a predetermined value or other corresponding information. For example, a radio resource may be specified with an index.

Names as used for the above-stated parameters are not restrictive from any standpoint. Furthermore, there are some cases where formulae and so on using these parameters may be different from ones as explicitly disclosed in the present specification. Various channels (for example, a PUCCH, a PDCCH or the like) and information elements (for example, a TPC or the like) can be identified with any preferred names, and the various names assigned to these various channels and information elements are not restrictive from any standpoint.

Abase station can accommodate one or more (for example, three) cells (also referred to as sectors) . If the base station accommodates multiple cells, the whole coverage area of the base station can be segmented into multiple smaller areas, and the respective smaller areas can provide communication services with a base station subsystem (for example, indoor small base station RRH: Remote Radio Head). The terminology "cell" or "sector" indicates a part or whole of the coverage area of the base station providing communication services in the coverage and/or the base station subsystem. Furthermore, the terminologies "base station", "eNB", "cell" and "sector" can be interchangeably used in the present specification. The base station may be referred to as terminologies such as a fixed station, a NodeB, an eNodeB (eNB), an access point, a femtocell and a small cell.

A mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or any other appropriate terminologies.

There are some cases where terminologies "determining" as used in the present specification may include various operations. The "determining" may include calculating, computing, processing, deriving, investigating, looking up (for example, looking up a table, a database or other data structures) and ascertaining, for example. Also, the "determining" may include receiving (for example, receiving information), transmitting (for example, transmitting information), inputting, outputting and accessing (for example, accessing data in a memory) . Also, the "determining" may include resolving, selecting, choosing, establishing, comparing or the like. In other words, the "determining" may include any operation.

The terminologies "connected", "coupled" or all variations thereof mean direct or indirect connection or coupling between two or more elements and can include existence of one or more intermediate elements between two mutually "connected" or "coupled" elements. The coupling or connection between elements may be physical, logical or in combinations thereof. If they are used in the present specification, it can be considered that two elements are mutually "connected" or "coupled" with use of one or more electric wires, cables and/or print electric connections and as several non-limiting and non-comprehensive examples, with use of electromagnetic energy such as electromagnetic energy having a wavelength of a radio frequency domain, a microwave domain and an optical (both visible and invisible) domain.

A reference signal can be omitted as a RS (Reference Signal) and may be referred to as a pilot depending on applied standards.

The recitation "based on" as used in the present specification does not mean "only based on", unless specifically stated otherwise. In other words, the recitation "based on" means both "only based on" and "at least based on".

Any reference to elements with use of terminologies such as "first", "second" and so on as used in the present specification does not limit the amount or order of these elements in general. These terminologies can be used in the present specification as convenient manners for distinguishing between two or more elements. Accordingly, the reference to the first and second elements does not mean that only the two elements are used there or the first element has to precede the second element in any fashion.

The terminology "means" in an arrangement of each apparatus as stated above may be replaced with "unit", "circuit", "device" or the like.

As long as the terminologies "include", "including" and variations thereof are used in the present specification or claims, these terminologies are intended to be inclusive similar to the terminology "comprising". Furthermore, the terminology "or" as used in the present specification or claims is intended not to be an exclusive OR.

A radio frame may be arranged with one or more frames in a time domain. In the time domain, one or more frames each may be referred to as a subframe. The subframe may be further arranged with one or more slots in the time domain. The slot may be further arranged with one or more symbols (OFDM symbols, SC-FDMA symbols and so on) in the time domain. Any of the radio frame, the subframe, the slot and the symbol represents a time unit for transmitting signals. The radio frame, the subframe, the slot and the symbol may be referred to in other corresponding manners. For example, in LTE systems, a base station performs scheduling to assign radio resources (frequency bandwidths, transmission power and so on available in the mobile station) to mobile stations. The minimum time unit for scheduling may be referred to as a TTI (Transmission Time Interval) . For example, one subframe, multiple contiguous subframes or one slot may be referred to as the TTI. A resource block (RB) may be a resource assignment unit in the time domain and the frequency domain and may include one or more contiguous subcarriers in the frequency domain. Also, in the time domain, the resource block may include one or more symbols and have one slot, one subframe or one TTI in length. The single TTI and subframe each may be arranged with one or more resource blocks. The above-stated arrangement of radio frame is merely exemplary, and the number of subframes in the radio frame, the number of slots in the subframe, the number of symbols and resource blocks in the slot and the number of subcarriers in the resource block can be changed in any manner.

Although the embodiments of the present invention have been described in detail, the present invention is not limited to the above-stated specific embodiments, and various modifications and variations can be made within the spirit of the present invention as recited in claims.

This patent application is based on and claims the benefit of priority of Japanese Patent Application No. 2017-001452 filed on January 6, 2017, the entire contents of which are hereby incorporated by reference.

### LIST OF REFERENCE SYMBOLS

- 10: radio communication system
- 100, 101: user equipment
- 110: transmission and reception unit
- 120: muting unit
- 200, 201: base station
- 210: communication control unit
- 220: muting unit

## Claims

1. A user equipment, comprising:
a transmission and reception unit configured to transmit and receive radio signals to and from a base station in accordance with a communication scheme where uplink communication and downlink communication are dynamically switched; and
a muting unit configured to mute an uplink radio resource indicated from the base station,
wherein the transmission and reception unit transmits a demodulation reference signal in the radio resource indicated from the base station to the base station, and the muted uplink radio resource corresponds to a downlink radio resource for transmitting a downlink demodulation reference signal after a downlink control channel at an adjacent base station.

2. The user equipment as claimed in claim 1, wherein the radio resource for the demodulation reference signal and the muted radio resource are indicated in one or both of upper layer signaling and L1 signaling.

3. The user equipment as claimed in claim 1 or 2, wherein the muting unit transmits a subframe including the muted radio resource in a configured time domain and frequency domain.

4. A base station, comprising:
a communication control unit configured to control radio communication with a user equipment in accordance with a communication scheme where uplink communication and downlink communication are dynamically switched; and
a muting unit configured to mute a downlink radio resource,
wherein the communication control unit transmits a demodulation reference signal to the user equipment in a radio resource where an adjacent user equipment performing radio communication with an adjacent base station does not perform uplink transmission, and the muting unit mutes a downlink radio resource corresponding to a radio resource where the adjacent user equipment performs the uplink transmission.

5. The base station as claimed in claim 4, wherein the communication control unit time-spreads or frequency-spreads and transmits the demodulation reference signal.

6. The base station as claimed in claim 4 or 5, wherein the communication control unit layers and transmits the demodulation reference signal.
